(19) **Europäisches Patentamt European Patent Office Office européen des brevets**

(11) **EP 4 550 481 A1**

(12) **EUROPEAN PATENT APPLICATION**

(43) Date of publication:
**07.05.2025 Bulletin 2025/19**

(21) Application number: **23207554.9**

(22) Date of filing: **02.11.2023**

(51) International Patent Classification (IPC):
*H01M 4/86* (2006.01)     *C25B 11/037* (2021.01)
*C25B 11/054* (2021.01)     *C25B 11/065* (2021.01)
*C25B 11/081* (2021.01)     *H01M 4/88* (2006.01)
*H01M 4/90* (2006.01)     *H01M 4/92* (2006.01)
*H01M 8/10* (2016.01)

(52) Cooperative Patent Classification (CPC):
**H01M 4/926; C25B 11/037; C25B 11/054;
C25B 11/065; C25B 11/081; H01M 4/8621;
H01M 4/8636; H01M 4/8657; H01M 4/8807;
H01M 4/8825; H01M 4/9083;** H01M 4/8668;
H01M 4/8828; H01M 4/8832; H01M 4/8835;

(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Albert-Ludwigs-Universität Freiburg
79098 Freiburg (DE)**

(72) Inventors:
• **Fischer, Anna
79117 Freiburg (DE)**

• **Küspert, Sven
79104 Freiburg (DE)**
• **Martin, Julian
79104 Freiburg (DE)**
• **Elsässer, Patrick
79822 Titisee-Neustadt (DE)**
• **Oechsler, Jan
79104 Freiburg (DE)**
• **von Holst, Miriam
78052 Villingen-Schwenningen (DE)**

(74) Representative: **noventive
Patentanwaltsgesellschaft mbH
Riesstraße 16
80992 München (DE)**

(54) **POROUS CATALYST LAYER MADE OF LOW DISPERSITY POROUS SPHERICAL CARBON PARTICLES AND METAL NANOPARTICLES SUPPORTED THEREON, MEMBRANE-ELECTRODE ASSEMBLIES MADE THEREFROM AND THEIR USE**

(57) The present invention relates to porous catalyst layers comprising a metal nanoparticle loaded porous carbon structure, wherein the porous carbon structure is assembled from porous spherical carbon particles with a particle size dispersity (Đ) of 1.2 or less, and with a templated pore size with a templated pore size dispersity (Đ') of 1.2 or less. The invention further relates to the method of production of such porous catalyst layer, electrodes obtained from such porous catalyst layers and their use in fuel cells or electrolysers.

Fig. 6

EP 4 550 481 A1

(52) Cooperative Patent Classification (CPC): (Cont.)
H01M 4/8842; H01M 4/8857; H01M 4/886;
H01M 2008/1095

**Description**

FIELD OF THE INVENTION

The present invention relates to metal nanoparticle loaded porous catalyst layers for use in membrane-electrode assemblies, their method of production and their use in membrane-electrode assemblies. The invention further concerns proton or anion exchange membrane fuel cells and electrolysers making use of the porous catalyst layers according to the invention.

BACKGROUND OF THE INVENTION

Membrane electrode assemblies (MEAs) play a central role in the field of electrochemical energy conversion, including proton and anion exchange membrane (PEM, AEM) fuel cells and electrolysers. They form the electrochemical core of these technologies and determine the achieved performance indicators, such as for example power density or hydrogen production rate. MEAs consist of different closely joined components: an anode gas diffusion layer (GDL), an anode catalyst layer (ACL), a PEM or AEM, a cathode catalyst layer (CCL) and a cathode GDL. The GDLs may further include a microporous layer (MPL).

MEAs can be processed and assembled in two ways. On the one hand, a PEM or AEM can be coated on one side with the anode catalyst, resulting in an ACL. The other side is coated with the cathode catalyst, resulting in a CCL. The closely joined layer structure between ACL, PEM or AEM and CCL is called a catalyst coated membrane (CCM). The CCM is then provided with the microporous and gas diffusion layers on both sides and pressed. A different approach is based on coating the anodeside and cathode-side microporous and gas diffusion layers with anode and cathode catalyst layers (ACL and CCL), resulting in anode and cathode gas diffusion electrodes. To assemble an MEA, these are then pressed together with a PEM or AEM. The three-dimensional structure (percolation, tortuosity, porosity, ionomer to carbon content) of the catalyst layers is an important factor in the final performance of a PEM/AEM-based electrochemical energy conversion system, i.e. a hydrogen PEM/AEM fuel cell or a PEM/AEM water electrolyser.

The catalyst layers (ACL and CCL) comprise constituent particles (ordinarily carbon particles) that are bound together by ion-conducting polymers (socalled ionomers), which act as electrolytes and binders in the catalyst layers and between the catalyst layers and the membrane. The constituent particles are loaded with a catalytic species which imparts catalytic activity to the constituent particles, thereby forming a catalyst particle, which upon assembly may subsequently give rise to a catalyst layer. The catalyst layers may for example be produced from inks or pastes containing a solvent, an ionomer and the corresponding constituent particles using various coating techniques. This results in porous catalyst layers or electrodes in which the porosity is determined, for example, by interparticle packing of the constituent particles and the aggregation behaviour of these particles.

Suter et. al., in the review article "Engineering Catalyst Layers for Next-Generation Polymer Electrolyte Fuel Cells: A Review of Design, Materials, and Methods" (Adv. Energy Matter. 2021, 11, 2101025; https://doi.org/10.1002/aenm.202101025), have shown that the extent of interparticle porosity in the catalyst layer, i.e. the porosity between the constituent particles, is determined by the morphology of the constituent particles themselves (primary particles) and their secondary aggregates, significantly influenced by the morphology of the carbon support, by the ionomer, the composition of the catalyst ink or paste and the coating process. Similar relationships have also been described Liu et al. in the review article "Effect of Catalyst Ink and Formation Process on the Multiscale Structure of Catalyst Layers in PEM Fuel Cells" (Appl. Sci. 2022, 12, 3776; https://www.mdpi.com/2076-3417/12/8/3776).

An optimised porous structure of the catalyst layer reconciles the requirements for high interparticle conductivity through contacted packing of the constituent particles and rapid ion transport through continuous percolation of the ionomer around the constituent particles and to the membrane, as well as rapid gas and water transport through highly porous morphologies of the catalyst particle/ionomer agglomerates. The most important structure-determining building block of the three-dimensional porous catalyst layer is the (carbon) support, which determines the morphology of the catalyst particles, and comprises catalytically active species (e.g. Pt nanoparticles in the case of fuel cells and electrolysis technology).

State-of-the-art catalysts for PEM/AEM fuel cell anodes and cathodes as well as PEM/AEM electrolyser cathodes consist of metal nanoparticles that are finely distributed on the surface or in the pores of conductive carbon supports (carbon black), such as Black Pearls(R), Vulcan(R), Ketjenblack(R) (see e.g. Wang et al. in "Achievements, challenges and perspectives on cathode catalysts in proton exchange membrane fuel cells for transportation" (Nature Catalysis 2019, 2, 578 - 589; https://doi.org/10.1038/s41929-019-0304-9)).

All these carbon supports have high dispersity primary particle sizes (< 100 nm), which aggregate into larger undefined porous secondary particles. The porosity and 3D porous structure of catalyst layers in CCMs or gas diffusion electrodes (GDE) depend significantly on the following parameters: the constituent particle size, the constituent particle size distribution, the constituent particle morphology as well as the constituent particle agglomeration and stability of possible agglomerates in dispersion media, i.e. the single particle dispersibility. These factors determine the constituent particle percolation and packing resulting in the catalyst layer, which in this case defines the interparticle porosity in the layer. The intraparticle porosity, if present, defines an additional porosity and hierarchy level in the catalyst layers and determines where the catalytically active metal nanoparticles are located; outside the constituent particles in the case of non-porous primary particles, inside the constituent particles in the case of highly porous primary particles.

Both interparticle and intraparticle porosity levels are essential to optimise mass transport of reactants and products in the catalyst layers and thus influence the performance but also longevity of the systems.

State-of-the-art metal nanoparticle-based catalysts for PEM/AEM fuel cell anodes and cathodes as well as PEM/AEM electrolyser cathodes are based on very highly disperse carbon supports with broad particle size distributions, as mentioned before, and thus have a very broad constituent particle size distribution themselves. This leads to catalyst layers based on these having an uncontrolled porosity, which is therefore poorly reproducible and cannot be adjusted to maximum performance, as the carrier carbons have highly disperse particle sizes due to their manufacturing processes. Thus, no controlled or tailored bottom-up 3D catalyst layer/electrode design is possible based on the currently available state-of-the-art catalysts, since the state-of-the-art catalysts consist of state-of-the-art high dispersity non-adjustable carbon materials; independent of the catalytically active metal nanoparticles supported on these carbons.

When catalysts composed of these carbons are manufactured or integrated into CCMs, GDEs or MEAs, undefined porous catalyst layers are created in which the porosity is determined by the packing of the constituent particles or the secondary catalyst aggregates. Due to the high dispersity of the constituent particles, the 3D porous structure of the catalyst layers is not adjustable, poorly reproducible and in many cases (if the electrode thickness is too high) only partially accessible for gases, protons, hydroxide anions etc. Furthermore, the mass transport in the catalyst layers can hardly be optimised, since the porosity in the catalyst layer is programmed by the constituent particle morphology and size after processing, which severely limits the performance of such non-optimised CCMs/GDEs/MEAs, especially at high current densities. Finally, if the constituent particles are very small, their tight packing upon formation of a catalyst layer leads to low interparticular porosity, thereby further limiting accessibility for gases, protons, hydroxide anions etc. This limits the achievable power for PEM/AEM fuel cells and the achievable hydrogen productivity for PEM/AEM electrolysers.

Joo et al., in "Preparation of mesoporous carbon templated by silica particles for use as a catalyst support in polymer electrolyte membrane fuel cells" (Catalysis Today 111 (2006), 171 - 175) disclose Pt-loaded mesoporous carbon catalysts. However, the catalysts have irregular morphology, as shown by TEM imaging.

Shu et al., in "Hierarchically mesoporous carbon spheres coated with a single atomic Fe-N-C layer for balancing activity and mass transfer in fuel cells" (Carbon Energy. 4 (2022) 1 - 11) disclose the formation of iron-loaded mesoporous carbon spheres, consisting of hierarchically porous carbon spheres (HPCS) as the core and a single Fe atom-doped m-phenylenediamine coating layer (Fe-mPDA) as functional shells. However, the particle size dispersity of these structures was large and therefore it was not possible to produce regularly structured catalyst layers.

EP 3 828 133 A1 discloses the use of mesoporous carbon as a catalyst support for an air electrode catalyst carrier in a polymer electrolyte fuel cell. In this case also, the structure of the mesoporous carbon was irregular and obtained electrode structures were not reproducible, as shown be SEM imaging.

Choi et al., in "Single-Step Fabrication of a Multiscale Porous Catalyst Layer by the Emulsion Template Method for Low Pt-Loaded Proton Exchange Membrane Fuel Cells" (ACS Appl. Energy Mater. 2021, 4, 4, 4012 - 4020) disclose the use of emulsion template methods for single-step fabrication of multiscale porous catalyst layers with macropores and mesopores.

Wang et al., in "Controlled Synthesis of N-Doped Carbon Nanospheres with Tailored Mesopores through Self-Assembly of Colloidal Silica" (Angew. Chem. Int. Ed. 2015, 54, 15191 - 15196) discloses composite particles obtained by oxidative polymerisation of aniline in the presence of silica templates. However, there is no disclosure of deposition of metal nanoparticles, nor of a defined electrode structuring.

The state of the art therefore constitutes a problem.

SHORT DESCRIPTION OF THE INVENTION

The present invention is defined in the appended claims.

The solution to the described problems according to the present invention is to use metal nanoparticle loaded low dispersity porous carbon particles (with adjustable pore and particle sizes), starting from low dispersity porous spherical carbon particles with adjustable pore and particle sizes. This allows the manufacture of three-dimensional (3D)-percolated metal nanoparticle-loaded porous catalyst layers with adjustable interparticle and intraparticle porosity based thereon.

In particular, the present invention is embodied by a porous catalyst layer comprising a metal nanoparticle loaded porous carbon structure, wherein the porous carbon structure is assembled from porous spherical carbon particles with a particle size dispersity Đ of 1.2 or less, and with a templated pore size with a templated pore size dispersity Đ' of 1.2 or less.

In one preferred embodiment, the particle size dispersity Đ and/or the templated pore size dispersity Đ' of the porous spherical carbon particles employed to assemble the porous catalyst of the present invention may be 1.1 or less.

Thus, by adjusting the shape and size as well as the intraparticle porosity of the carbon particles and the 3D interparticle porosity between the metal nanoparticle-loaded carbon particles in the catalyst layer, the structure and morphology of the porous catalyst layer may be controlled. The particle size dispersity of the carbon structure within the catalyst corresponds to the particle size dispersity of the spherical carbon support particles. The intraparticle porosity of the carbon particles within the catalyst layer also corresponds to the intraparticle porosity of the carbon support particles. This results in highly defined hierarchical 3D porous catalyst layers with adjustable porosity. While the presence of the metal nanoparticle loading within the porous catalyst layer structure may influence the actual porosity of the structure, this change in porosity does not significantly affect its properties. It follows that the properties of the catalyst layers in mass transport can be specifically controlled via the properties of the carbon supports and the metal nanoparticle loaded catalysts derived from them, in order to generate increased performance values in PEM/AEM fuel cells and PEM/AEM electrolysers.

This approach thus systematically enables optimisation of reproducibility, adjustment of the porosity and an improvement of the mass transport in CCMs, GDEs or MEAs. Optimised mass transport enables higher current densities to be achieved in PEM/AEM fuel cells and PEM/AEM electrolysis cells, i.e. higher power densities or hydrogen productivities.

According to one embodiment of the present invention, the porous spherical carbon particles may have particle diameters of 10 nm to 5000 nm, preferably of 25 nm to 2500 nm or of 50 nm to 500 nm, and wherein the templated pore sizes are from 1 nm to 1000 nm, preferably from 2 nm to 500 nm or from 5 nm to 100 nm. The use of these particle diameters and templated pore sizes may result in the porous carbon structure having a specific surface area of $25 \ m^2 \cdot g^{-1}$ to $3000 \ m^2 \cdot g^{-1}$, or from $200 \ m^2 \cdot g^{-1}$ to $1500 \ m^2 \cdot g^{-1}$, and pore volumes of $0.1 \ cm^3 \cdot g^{-1}$ to $5.0 \ cm^3 \cdot g^{-1}$, or from $0.25 \ cm^3 \cdot g^{-1}$ to $3.0 \ cm^3 \cdot g^{-1}$.

According to one embodiment of the present invention, the porous carbon structure may have a metal nanoparticle loading of 1 to 95 wt.-%, based on the total weight of the metal nanoparticle loaded porous carbon structure. For example the loading may be 5 to 90 wt.-%, or 10 to 85 wt.-%, or 15 to 80 wt.-%, or 20 to 75 wt.-%, or 25 to 70 wt.-%, or 30 to 65 wt.-%, or 35 to 60 wt.-%, or 40 to 55 wt.-%, or 45 to 50 wt.-%. Depending on the intended use, the catalytic activity of the porous catalyst layer according to the invention may be adapted in line with the metal nanoparticle loading.

According to one embodiment of the present invention, the metal nanoparticles may be selected from nanoparticles made of a single metallic or metalloid element, including transition metals, or alloys comprising different metallic and/or metalloid elements. For example, the metal nanoparticle may be any nanoparticle of a metal from the Groups 1, 2, 12, 13, 14, 15, or 16 of the Periodic table of the elements, or any transition metal from the Groups 3, 4, 5, 6, 7, 8, 9, 10, 11, or 12 of the Periodic table of the elements, or any metal from the lanthanide of actinide series, or any metalloid from the Groups 13, 14, 15, 16, or 17 of the Periodic table of the elements. Alternatively, the metal nanoparticle may be an alloy of any two or more metal and/or metalloid elements from the Groups as indicated above. According to the present invention, the metal nanoparticles loaded on the porous carbon structure may have identical or different metallic compositions.

According to one embodiment of the present invention, the metal nanoparticles of the porous catalyst layer may have a diameter in any dimension of no more than 100 nm, for example from 1 nm to 75 nm, or from 2 nm to 60 nm, or from 3 nm to 40 nm, or from 4 nm to 25 nm, or from 5 nm to 20 nm, or from 7 nm to 15 nm, or from 8 nm to 10 nm.

According to one embodiment of the present invention, the porous carbon structure may have an interparticle pore volume from 15% to 60%, for example from 20% to 55%, or from 25% to 50%, or preferably from 26% to 48%. Interparticle pore volume refers to the volume of the porous carbon structure which is left void between individual porous spherical carbon particles after assembly. Depending on the intended use of the porous carbon structure, the interparticle pore volume may be selected to achieve best possible results.

According to one embodiment of the present invention, a ratio of intraparticle pore volume to interparticle pore volume may be from 0.05 to 3.0, preferably from 0.1 to 2.0, more preferably from 0.7 to 1.9. Intraparticle pore volume derives from the volume of the templated pores of the porous spherical carbon particles employed to assemble the porous carbon structure according to the invention, whereas interparticle volume refers to the volume of the porous carbon structure which is left void between individual porous spherical carbon particles after assembly. The ratio of intraparticle pore volume to interparticle pore volume is derived from cumulative pore volume (obtained by QSDFT computation from $N_2$ physisorption) and density measurement of the porous carbon structure (obtained by pycnometry), under assumption of a filling ratio of 74% for perfect packing of spherical carbon particles. Depending on the intended use of the porous carbon structure, the ratio of intraparticle pore volume to interparticle pore volume may be selected to achieve best possible results.

Also part of the present invention is a method of production for a porous catalyst layer of the invention. The method comprises the steps of (i) providing low dispersity porous spherical carbon particles as described above, loaded with metal nanoparticles; (ii) mixing the provided metal nanoparticle loaded porous spherical carbon particles with one or more additives (especially a polymeric electrolyte); (iii) applying the obtained mixture onto a substrate to form a layer of metal nanoparticle loaded porous carbon structure; (iv) drying and/or curing the applied mixture to form a dry layer of metal nanoparticle loaded porous carbon structure; and (v) optionally calendering the dry layer of metal nanoparticle loaded porous carbon structure.

According to one embodiment of the invention, the mixing step (ii) includes addition of a dispersion medium to form an ink or a paste, and step (iii) is carried out by 3D-printing, slot-die coating, ink-jet printing, doctor-blading, spray coating, spin-coating or dip-coating.

Also part of the present invention is a membrane electrode assembly comprising one or more catalyst layers consisting of or comprising a metal nanoparticle loaded porous carbon structure according to the present invention.

According to one embodiment of the invention, the catalyst layers of the membrane electrode assembly may further include one or more binders such as for example polymeric binders and/or ionomers.

Finally, also encompassed by the present invention is the use of a porous catalyst layer or of a membrane electrode assembly according to the invention in an electrochemical energy conversion device such as a PEM/AEM fuel cell or a PEM/AEM electrolyser.

SHORT DESCRIPTION OF THE FIGURES

The invention will be further illustrated by reference to the following figures:

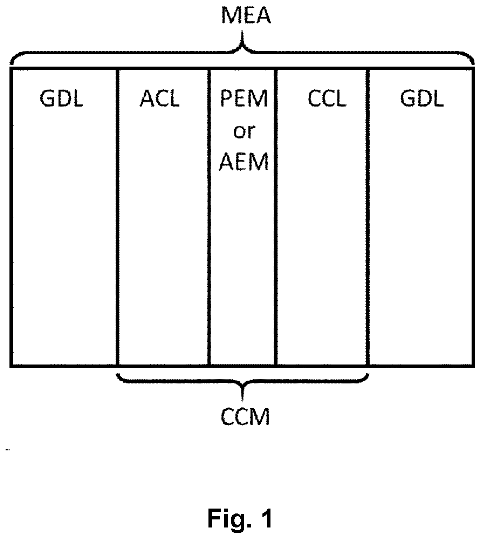

Fig. 1 is a schematic representation of an MEA layered structure;

Fig. 2 is a schematic representation comparing prior art high dispersity particle sizes (left), which lead to undefined electrode structures, to low dispersity particle sizes according to the present invention (right), which enable the production of defined and reproducible porous catalyst layers;

Fig. 3 shows SEM images of carbon support materials in SE (secondary electron) mode of the prior art (a, b, c) and according to the present invention (e, f, g), with the respective particle size distributions shown (d, h);

Fig. 4 shows results of nitrogen physisorption measurements at 77 K of the prior art and according to the present invention on a 3P Instruments machine with (a) isotherms, (b) calculated pore size distribution via a QSDFT model, and (c) the BET surface area of Ketjenblack and MPNC-7-130 with 785 and 876 $m^2g^{-1}$, respectively;

Fig. 5 shows XRD (b) on a Bruker D8 Discover of the prior art and according to the present invention, and SEM images of the prior art (c, d, g, h) and the present invention (a, e, f, I, j) in both SE (secondary electron) mode and TE (transmission electron mode);

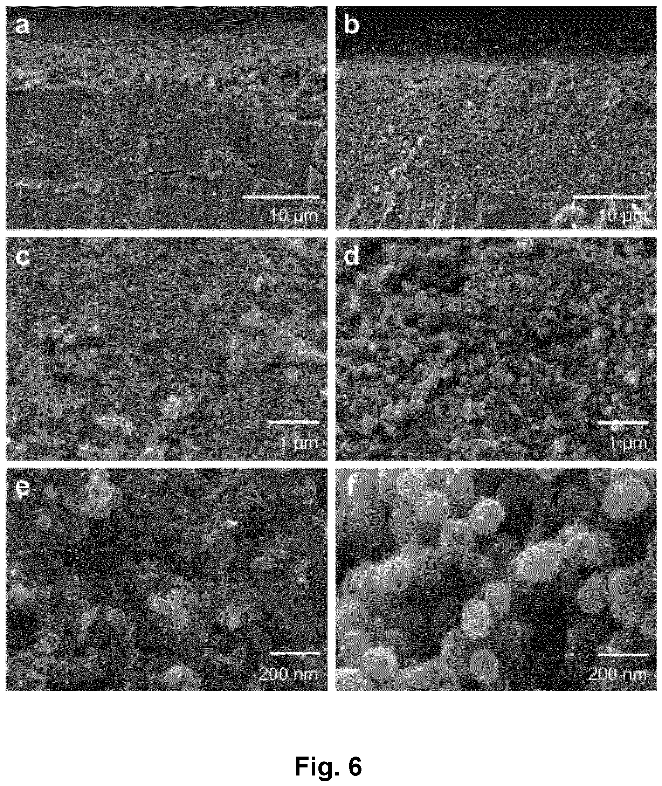

Fig. 6 shows SEM images of the coatings prepared from the electrocatalyst material-based inks of the prior art (a, c, e) and according to the present invention (b, d, f);

Fig. 7 shows polarization curves (a), mass activity (b), electrochemical surface area (ECSA) (c) and peak power density (d) of the prior art and according to the present invention.

It is understood that the following description and references to the figures concern exemplary embodiments of the present invention and shall not be limiting the scope of the claims.

DETAILED DESCRIPTION OF THE INVENTION

For a better understanding of the invention, the following explanations of the terminology used herein are considered useful. In the context of the present invention, the following definitions apply:

"Porous catalyst layer" as used in the present application means a percolated structure suitable for use in a catalyst coated membrane. For example, a porous catalyst layer may comprise a supported metal catalyst for enhancing reaction rates and electronic conduction, an ionomer for ion conduction, and voids for reactant gas and water transport.

"Porous carbon structure" as used in the present application means a structure comprising a solid stable assembly of percolated carbon particles, wherein individual assembled carbon particles are specifically arranged in space with respect to each other, and wherein voids between individual carbon particles form an interparticular porosity. As used herein, porous carbon structures may comprise additional species besides the percolated carbon particles, such as heteroatoms, doping agents, additives, binders, and other species.

"Particle diameter", also referred to as particle size, indicates the spatial extent of a single particle. Particle diameters are determined by counting out the particle diameters on electron micrographs obtained by scanning (transmission) electron microscopy with a sufficient large number of particles (at least 200 particles). Non-spherical particles (for example elliptical particles) are described by their minimum and maximum diameter.

"Particle-diameter dispersity Đ ("D stroke") is based on the IUPAC definition of dispersity given in Pure Appl. Chem., Vol. 83, No. 12, pp. 2251-2259, 2011. Particle diameter dispersity Đ measures the width of a particle-diameter distribution and is given by

$$\mathrm{\DJ} = \frac{\sum N_i \sum N_i d_i^4}{\sum N_i d_i \sum N_i d_i^3},$$

wherein $N_i$ denotes the number of particles of diameter $d_i$. For a sample of completely uniform particle-diameters Đ would be 1. Narrow particle diameter distributions having values for Đ ≤ 1.2, preferably ≤ 1.1 may be referred to as monodisperse particles, or low dispersity particles. Particle diameter distributions having values for Đ > 1.2, may be referred to as polydisperse particles or high dispersity particles.

"Pore size" (pore width) means the distance between two opposite walls of the pore. According to IUPAC nomenclature (Pure & Appl. Chem. Vol. 66, No. 8, pp. 1739-1758, 1994) micropores have width smaller than 2 nm, mesopores have width between 2 and 50 nm, macropores have widths larger than 50 nm.

"Templated pore size" means the diameter of a spherical template employed for the pore formation in spherical porous carbon particles as used in the present invention. Polymerisation of a carbon precursor in the presence of nanometer-sized spherical templates leads to the formation of carbon-template composites. Removal of the template material leaves nanometer-sized pores within the polymeric carbon structures. The pores may be interconnected, and therefore the pores will not exclusively have spherical shapes, but they may take the shape of juxtaposed spheres with varying intersectional diameters. Therefore, "templated pore size" may differ from measured pore size, and the templated pore size dispersity may differ from the measured pore size dispersity. The templated pore size dispersity Đ' corresponds to the particle diameter dispersity of the templates employed to form the pores.

"Nanoparticle" means a particle of any shape with dimensions in the 1 nm to 100 nm range. Tubes and fibers with only two dimensions below 100 nm are also nanoparticles (see Pure Appl. Chem., 84, 2, 377 - 410).

The present invention according to the appended claims provides metal nanoparticle loaded low dispersity porous carbon particles with adjustable particle and pore sizes for building 3D-percolated catalyst layers based thereon, in which the interparticle porosity is defined by the arrangement of the metal nanoparticle loaded low dispersity spherical carbon particles, and the intraparticle porosity is defined by the intraparticle porosity of the metal nanoparticle loaded low dispersity spherical carbon particles.

Prior to the conception of the present invention, such an approach did not exist in the field of MEA or CCM or GDE production for fuel cells and electrolysers, because there were hardly any scaled and commercial metal nanoparticle loaded low dispersity porous carbon particles available, in which the carbon particle size and pore size could be adjusted to build up the catalyst layers according to the present invention. Building a controllable hierarchical 3D porosity in catalyst layers with state-of-the-art particles was thus not possible.

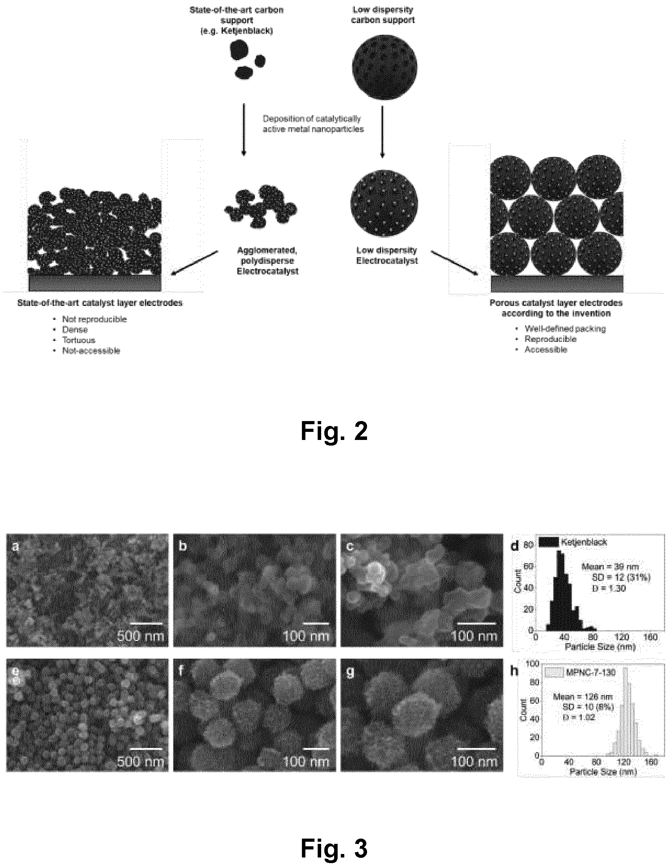

As shown in Fig. 2, high dispersity carbon particles lead to irregular and non-reproducible active electrodes, whereas low dispersity carbon particles lead to regular and reproducible active electrodes. According to the prior art, a highly defined structuring of catalyst layers was not possible for carbon supports. The present invention allows access to controllable metal nanoparticle loaded porous catalyst layers that can increase power density or hydrogen productivity in the field of fuel cells and electrolysers by improving mass transport. Based on the optimised interparticle and intraparticle porosity within the catalyst layer, the entire electrode becomes electrochemically accessible, which is not necessarily the case with conventional unstructured electrodes. This leads to better performance of the 3D-structured electrode with the same amount of the active expensive catalyst material, or, alternatively, allows the reduction of the expensive active catalyst metal with the same performance.

Furthermore, the reproducibility of the electrode is improved, as metal nanoparticle loaded low dispersity spherical carbon particles or carbon supports are used to build 3D-structured electrodes. The morphological properties of the catalyst layer ultimately depend heavily on the morphological properties of the low dispersity carbon particle (adjustable templated pore size and spherical particle size, dispersity). Further adjustable properties of the low dispersity carbon particles, i.e. the microstructuring of the carbon particles, enable further adjustment possibilities of the electrode, such as conductivity, wettability, corrosion resistance. In fuel cell catalysis as detailed in the exemplary section, the metal nanoparticle loaded 3D-porous catalyst layers of metal nanoparticle loaded monodisperse porous carbon particles show the improvements in mass transport and catalysis to a state-of-the-art Pt loaded carbon material. Here, the catalytically active species is kept the same on both support systems to study the effect of the support.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

EXAMPLES

An electrocatalyst is composed of a carbon support and platinum in which the carbon supports are Ketjenblack[®] EC300J (KB) and mesoporous N-doped carbon (MPNC) nanospheres. KB was purchased from Nouryon whereas MPNC was synthesized based on a previous report (see Example 1 below). The active material used in this exemplary embodiment are Pt nanoparticles. The synthesis reactants $H_2PtCl_6$ $6H_2O$ (Grade: Premion) and ethylene glycol ($\geq$ 99%) were purchased from AlfaAesar and Sigma-Aldrich, respectively. For the electrode ink, isopropanol ($\geq$ 99,5%) and 800EW ionomer were purchased from Carl Roth and 3M, repectively. A Fumatech fumapem[®] FS715RFS, 715 EW, 15 $\mu$m membrane and a Freudenberg H14Cx GDL were used for fuel cell tests. For the anode side of fuel cell tests, a Pt based catalyst TEC10E50E (TKK) was purchased from Tanaka Kikinzoku Kogyo. $O_2$, $H_2$ and $N_2$ with a gas purity of 99.999% were purchased from Sauerstoffinierke Friedrichshafen.

Example 1: Synthesis of carbon support - mesoporous N-doped carbon (MPNC) nanospheres

The synthesis of MPNC nanospheres has been reported previously by Melke et al. in "Electrochemical stability of silica-templated polyaniline-derived mesoporous N-doped carbons for the design of Pt-based oxygen reduction reaction catalysts (Carbon 146, 2019, 44 - 59; https://doi.org/10.1016/j.carbon.2019.01.057) and in "Investigating the Effect of Microstructure and Surface Functionalization of Mesoporous N-Doped Carbons on V4+/V5+ Kinetics (ACS Appl. Energy Mater. 2020, 3, 12, 11627 - 11640; https://dx.doi.org/10.1021/acsaem.0c01489). Aniline is polymerized in an oxidative polymerisation in the presence of nanosized $SiO_2$ particles, in order to form a polymer-$SiO_2$ composite. Then, the polymer-$SiO_2$ composite is carbonized at 1000°C under $N_2$, the template is removed by chemical etching and the sample is washed. A final heat-treatment step at 500°C under inert atmosphere is applied.

Fig. 3 shows SEM images of the carbon support materials in SE (secondary electron) mode of (a, b, c) KB and of (e, f, g) MPNC-7-130. SEM image measurements were carried out using a Field Emission Gun High Resolution SEM SU8220 (Hitachi). The particle size distributions of (d) KB and (h) MPNC-7-130 were determined using multiple images recorded with a magnification of 200kx and 50kx, respectively.

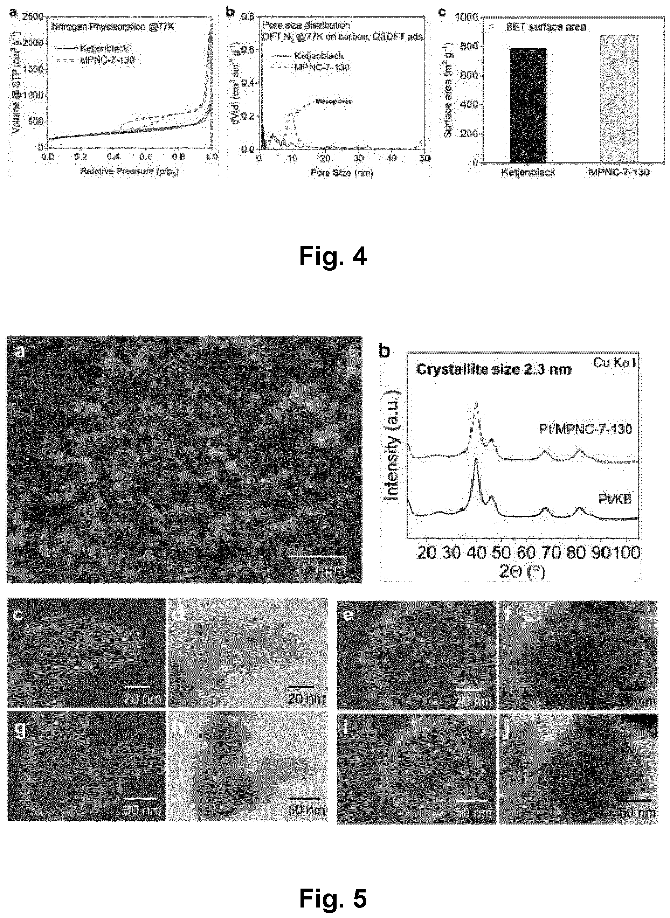

Fig. 4 shows nitrogen physisorption measurements at 77 K of KB and MPNC-7-130 on a 3P Instruments machine with (a) isotherms and (b) calculated pore size distribution via a quenched solid density functional theory model (QSDFT adsorption branch of $N_2$ at 77 K on carbon, taking into account slit/spherical/cylindrical pores). The measurements clearly show the defined mesoporosity of the MPNC sample. Part (c) shows the surface area (BET, Brunauer-Emmett-Teller) of KB and MPNC-7-130 with 785 and 876 $m^2g^{-1}$, respectively.

Example 2: Deposition of Pt nanoparticles on carbon support

The synthesis of Pt nanoparticles on KB and low dispersity MPNC nanospheres with a templated pore size of 7 nm, a mean particle size of 126 nm and carbonized at 1000°C (MPNC-7-130) is based on a state-of-the-art ethylene glycol route: 350 mg carbon support was dispersed in 200 ml ethylene glycol and homogenized by vigorous stirring. $H_2PtCl_6$ $6H_2O$ was dissolved in 100 ml water and subsequently added to the carbon suspension. Thereby, a specific amount of Pt precursors was used to obtain a Pt mass loading of 40 wt.-%, based on the total mass of Pt and carbon. The suspension was stirred at 120°C for 2 h and cooled to room temperature for 1 h. Finally, the samples were washed with boiling water until the supernatant was neutral and dried under vacuum at 80°C.

Fig. 5 shows a low-magnification SEM image (a) of Pt/MPNC-7-130, and XRD (b) on a Bruker D8 Discover of electrocatalysts Pt/KB and Pt/MPNC-7-130 revealing the same XRD pattern and hence same Pt crystallite size (2.3 nm by Scherrer equation), as well as SEM images of electrocatalysts Pt/KB (in SE (secondary electron) mode c, g and TE (transmission electron) mode d, h) and Pt/MPNC-7-130 (in SE mode e, i and TE mode f, j). SEM image measurements were carried out using a Field Emission Gun High Resolution SEM SU8220 (Hitachi) equipped with a SE and TE detector.

Example 3: Fabrication of porous catalyst layers on CCMs and MEAs

The electrode active material was used as cathode electrocatalyst and deposited on a PEM. 100 mg of electrocatalyst was homogenized in 4.97 g of DI-water, 1.24 g of isopropanol and 0.77 g of ionomer dispersion (5 wt.-% in isopropanol), resulting in an I/C weight ratio of 0.65. The ink was placed in an ice-bath and mixed for 60 minutes with a tip sonicator (Hielscher UIS250L) at 480W. The dispersed ink was loaded into a spray coater (Sonaer Sono-Cell) and sprayed centrally through an $N_2$ driven 60 kHz nozzle onto the membrane (5 $\times$ 5 cm), which was placed on an 80°C hot plate. A 2 $\times$ 2 cm mask was applied to obtain a defined cell area of 4 $cm^2$. The targeted cathode mass loading of 0.4 mg Pt/$cm^2$ was determined gravimetrically and by micro-X-ray fluorescence (M4 Tornado of Bruker Nano GmbH).

For the ink of the anode side, 400 mg of TKK, with 19.89 g of DI water, 4.97 g of isopropanol and 3.11 g of ionomer dispersion (5 wt.-% in isopropanol) were homogenized and sprayed onto the other side of the membrane by the same process. However, the loading of the anode was set to 0.1 mg Pt/cm$^2$. GDLs and a PTFE gaskets (thickness 130 $\mu$m) were applied to each of the two electrodes in order to ensure homogenous gas distribution and avoid gas leakage, respectively. The resulting MEA was clamped between a meander-type flow field and a fuel cell fixture (5 Nm, Scribner Associates).

Example 4: Electrochemical characterization of porous catalyst layers as cathode electrocatalysts in a fuel cell

The electrochemical characterization of the porous catalyst layers, implemented in a CCM/MEA was performed on a test bench (Scribner Associates, Model 850e). The test protocol can be found in the following Table 1:

Table 1. Applied fuel cell test protocol

| | Protocol sequence | Operating conditions |
|---|---|---|
| 1. | Conditioning (Break-in) | 60 cycles between 0.2 V and 0.5 V for 30 s each, 80°C, 96% r.H., 100 kPa$_{abs}$ |
| 2. | Polarization curve under O$_2$/H$_2$ | UI-curve Anode: 0.25 l/min H$_2$, Cathode: 0.50 l/min 100% O$_2$, 80°C, 96% r.H., 100 kPa$_{abs}$, galvanostatic |
| 3. | Voltage recovery | Anode: 0.25 l/min H$_2$, Cathode: 1.00 l/min 21% O$_2$, 55°C, 100% r.H., 100 kPa$_{abs}$, 180 cycles between 0.08 and 0.12, 20 s each |
| 4. | Polarization curve under O$_2$/H$_2$ (Determination of mass activity) | UI-curve Anode: 0.25 l/min H$_2$, Cathode: 0.50 l/min 100% O$_2$, 80°C, 96% r.H., 100 kPa$_{abs}$, galvanostatic |
| 5. | Polarization curve under Air (21% O$_2$)/H$_2$ | UI-curve Anode: 0.25 l/min H$_2$, Cathode: 0.50 l/min 21% O$_2$, 80°C, 50% r.H., 100 kPa$_{abs}$, galvanostatic |
| 6. | Cyclic voltammetry (Determination of ECSA*) | Anode: 0.20 l/min H$_2$, Cathode: no flow, 35°C, 96% r.H., scan rate: 50 mV/s, range: 0.05 - 0.80 V |
| 7. | Liner sweep voltammetry (Determination of cross-over current I$_c$) | Anode: 0.20 l/min H$_2$, Cathode: 0.05 l/min N$_2$, 35°C, 96% r.H., scan rate: 1 mV/s, range: 0.00 - 0.60 V |
| *ECSA = electrochemical active surface area | | |

After the conditioning of the MEA (step 1) and activation in O$_2$ (Steps 2 and 3), a polarization curve in O$_2$ (step 4) was used to study the cathodic kinetics (mass activity) of the porous catalyst layer. The mass activity in A/g$_{Pt}$ was calculated by dividing the current at 0.9 V by the Pt mass on the cathode side. Thereby the currents were corrected by ohmic losses and the cross-over current Ic (step 7). The polarization curve step 5 applied lower relative humidities under air representing more realistic fuel cell conditions. Finally, cyclic voltammograms (step 6) were recorded to calculate the ECSA in m$^2$/g$_{pt}$ by integrating the I$_c$ corrected charge of hydrogen underpotential deposition and normalizing it to 210 $\mu$C/cm$^2$, which corresponds to a polycrystalline Pt surface covered with the theoretically maximum amount of hydrogen. The power density of the MEA is calculated by multiplying the applied current with the measured cell potential.

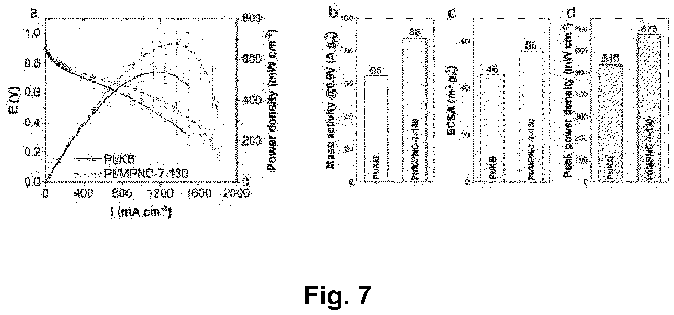

The results are shown in Fig. 7. Polarization curves (a) of porous catalyst layer material under the following conditions: Anode: 0.25 l/min H$_2$, Cathode: 0.50 l/min 21% O$_2$, 80°C, 50% r.H., 100 kPa$_{abs}$. Pt/MPNC-7-130 shows increased voltages over the entire current density region than a Pt/KB electrocatalyst based on a prior art carbon support with same Pt loading and particle size. Mass activity is shown in (b). ECSA is shown in (c). Peak power density is shown in (d). These reveal increased performance indicators of novel Pt/MPNC-7-130 based porous catalyst layer in all categories. The MEAs that use Pt/MPNC-7-130 instead of Pt/KB at the cathode show a higher performance in the activity range (0.9 V), which may be due to an improved ionomer distribution/connection. Higher performance is also seen in the high current density range, which may be due to better mass transport in the catalyst layer. Thus, electrodes based on Pt/MPNC-based catalysts or based on MPNC carbon supports show improved performance over the Pt/KB prior art.

**Claims**

1. Porous catalyst layer comprising a metal nanoparticle loaded porous carbon structure, wherein the said porous carbon structure is assembled from porous spherical carbon particles with a particle size dispersity (Đ) of 1.2 or less, and with a templated pore size with a templated pore size dispersity (Đ') of 1.2 or less.

2. Porous catalyst layer according to claim 1, wherein the said porous spherical carbon particles have particle diameters of 10 nm to 5000 nm, preferably of 25 nm to 2500 nm or of 50 nm to 500 nm, and wherein the templated pore sizes are from 1 nm to 1000 nm, preferably from 2 nm to 500 nm or from 5 nm to 100 nm.

3. Porous catalyst layer according to claim 1 or 2, wherein the porous carbon structure has a metal nanoparticle loading of 1 to 95 wt.-%, such as for example 5 to 90 wt. %, or 10 to 85 wt. %, or 15 to 80 wt. %, or 20 to 75 wt. %, or 25 to 70 wt. %, or 30 to 65 wt. %, or 35 to 60 wt. %, or 40 to 55 wt. %, or 45 to 50 wt. %, based on the total weight of the metal nanoparticle loaded porous carbon structure.

4. Porous catalyst layer according to any one of claims 1 to 3, wherein the metal is a metal selected from the Groups 1, 2, 12, 13, 14, 15, or 16 of the Periodic table of the elements, or a transition metal selected from the Groups 3, 4, 5, 6, 7, 8, 9, 10, 11, or 12 of the Periodic table of the elements, or a metal from the lanthanide of actinide series, or a metalloid from the Groups 13, 14, 15, 16, or 17 of the Periodic table of the elements, or wherein the metal is an alloy of any two or more metal and/or metalloid elements as defined above.

5. Porous catalyst layer according to any one of claims 1 to 4, wherein the metal nanoparticles have a diameter in any dimension of no more than 100 nm, for example from 1 nm to 75 nm, or from 2 nm to 60 nm, or from 3 nm to 40 nm, or from 4 nm to 25 nm, or from 5 nm to 20 nm, or from 7 nm to 15 nm, or from 8 nm to 10 nm.

6. Porous catalyst layer according to any one of claims 1 to 5, wherein the porous carbon structure has an interparticle pore volume is from 15% to 60%, for example from 20% to 55%, or from 25% to 50%, or preferably from 26% to 48%.

7. Porous catalyst layer according to any one of claims 1 to 6, wherein a ratio of intraparticle pore volume to interparticle pore volume is from 0.05 to 3.0, preferably from 0.1 to 2.0, more preferably from 0.7 to 1.9.

8. Porous catalyst layer according to any one of claims 1 to 7, wherein the particle size dispersity (Đ) of the porous spherical carbon particles and/or the templated pore size dispersity (Đ') of the porous spherical carbon particles is 1.1 or less.

9. Method of production for the porous catalyst layer of any one of the previous claims, comprising the steps of

   (i) providing low dispersity porous spherical carbon particles as defined in any one of claims 1 to 8, loaded with metal nanoparticles;
   (ii) mixing the provided metal nanoparticle loaded porous spherical carbon particles with one or more additives;
   (iii) applying the obtained mixture onto a substrate to form a layer of metal nanoparticle loaded porous carbon structure;
   (iv) drying and/or curing the applied mixture to form a dry layer of metal nanoparticle loaded porous carbon structure; and
   (v) optional calendering of the dry layer of metal nanoparticle loaded porous carbon structure.

10. Method of production according to claim 9, wherein the mixing step (ii) includes addition of a dispersion medium to form an ink or a paste, and wherein step (iii) is carried out by 3D-printing, slot-die coating, ink-jet printing, doctor-blading, spray coating, spin-coating or dip-coating.

11. Membrane electrode assembly comprising one or more catalyst layers consisting of or comprising a metal nanoparticle loaded porous carbon structure of any one of claims 1 to 8.

12. Membrane electrode assembly according to claim 11, wherein the one or more catalyst layers include one or more binders such as for example polymeric binders and/or ionomers.

13. Use of a porous catalyst layer of any one of claims 1 to 8 or of a membrane electrode assembly of any one of claims 11 or 12 in an electrochemical energy conversion device such as a PEM/AEM fuel cell or a PEM/AEM electrolyser.

**Fig. 1**

# Fig. 2

# Fig. 3

**Fig. 4**

**Fig. 5**

**Fig. 6**

**Fig. 7**

Europäisches
Patentamt

European
Patent Office

Office européen
des brevets

# EUROPEAN SEARCH REPORT

**Application Number**

EP 23 20 7554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MELKE JULIA ET AL: "Electrochemical stability of silica-templated polyaniline-derived mesoporous N-doped carbons for the design of Pt-based oxygen reduction reaction catalysts", CARBON, vol. 146, 19 January 2019 (2019-01-19), pages 44-59, XP093142882, GB ISSN: 0008-6223, DOI: 10.1016/j.carbon.2019.01.057 * abstract * * paragraph [2.Experiment] * * paragraphs [3.1.2.] - [3.1.3] * * figures 2-4 * | 1-13 | INV. H01M4/86 C25B11/037 C25B11/054 C25B11/065 C25B11/081 H01M4/88 H01M4/90 H01M4/92 ADD. H01M8/10 |
| A | MELKE JULIA ET AL: "Investigating the Effect of Microstructure and Surface Functionalization of Mesoporous N-Doped Carbons on V 4+ /V 5+ Kinetics", ACS APPLIED ENERGY MATERIALS, vol. 3, no. 12, 18 November 2020 (2020-11-18), pages 11627-11640, XP093142796, ISSN: 2574-0962, DOI: 10.1021/acsaem.0c01489 * abstract * * figures 2,3 * * paragraph [2.Experimentalsection] * | 1-13 | |
| A,D | EP 3 828 133 A1 (TOYOTA MOTOR CO LTD [JP]) 2 June 2021 (2021-06-02) * claims 1-9 * * figure 4 * | 1-13 | TECHNICAL FIELDS SEARCHED (IPC) H01M C25B |

The present search report has been drawn up for all claims

| Place of search | Date of completion of the search | Examiner |
|---|---|---|
| Munich | 16 August 2024 | Haering, Christian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 23 20 7554

This annex lists the patent family members relating to the patent documents cited in  the above-mentioned European search report.
The members are as contained in the European Patent Office EDP file on
The European Patent Office is in no way liable for these particulars which are merely given for the purpose of information.

16-08-2024

| Patent document cited in search report | | Publication date | Patent family member(s) | | Publication date |
|---|---|---|---|---|---|
| EP 3828133 | A1 | 02-06-2021 | BR | 102020024054 A2 | 15-06-2021 |
| | | | CN | 112875673 A | 01-06-2021 |
| | | | EP | 3828133 A1 | 02-06-2021 |
| | | | JP | 7153005 B2 | 13-10-2022 |
| | | | JP | 2021084852 A | 03-06-2021 |
| | | | KR | 20210067902 A | 08-06-2021 |
| | | | RU | 2761216 C1 | 06-12-2021 |
| | | | US | 2021163292 A1 | 03-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3828133 A1

**Non-patent literature cited in the description**

- **SUTER**. Engineering Catalyst Layers for Next-Generation Polymer Electrolyte Fuel Cells: A Review of Design, Materials, and Methods. *Adv. Energy Matter.*, 2021, vol. 11, 2101025, https://doi.org/10.1002/aenm.202101025
- **LIU et al.** Effect of Catalyst Ink and Formation Process on the Multiscale Structure of Catalyst Layers in PEM Fuel Cells. *Appl. Sci.*, 2022, vol. 12, 3776, https://www.mdpi.com/2076-3417/12/8/3776
- **WANG et al.** Achievements, challenges and perspectives on cathode catalysts in proton exchange membrane fuel cells for transportation. *Nature Catalysis*, 2019, vol. 2, 578-589, https://doi.org/10.1038/s41929-019-0304-9
- **JOO et al.** Preparation of mesoporous carbon templated by silica particles for use as a catalyst support in polymer electrolyte membrane fuel cells. *Catalysis Today*, 2006, vol. 111, 171-175
- **SHU et al.** Hierarchically mesoporous carbon spheres coated with a single atomic Fe-N-C layer for balancing activity and mass transfer in fuel cells. *Carbon Energy.*, 2022, vol. 4, 1-11

- **CHOI et al.** Single-Step Fabrication of a Multiscale Porous Catalyst Layer by the Emulsion Template Method for Low Pt-Loaded Proton Exchange Membrane Fuel Cells. *ACS Appl. Energy Mater.*, 2021, vol. 4 (4), 4012-4020
- **WANG et al.** Controlled Synthesis of N-Doped Carbon Nanospheres with Tailored Mesopores through Self-Assembly of Colloidal Silica. *Angew. Chem. Int. Ed.*, 2015, vol. 54, 15191-15196
- *Pure Appl. Chem.*, 2011, vol. 83 (12), 2251-2259
- *Pure & Appl. Chem.*, 1994, vol. 66 (8), 1739-1758
- *Pure Appl. Chem.*, vol. 84 (2), 377-410
- **MELKE et al.** Electrochemical stability of silica-templated polyaniline-derived mesoporous N-doped carbons for the design of Pt-based oxygen reduction reaction catalysts. *Carbon*, 2019, vol. 146, 44-59, https://doi.org/10.1016/j.carbon.2019.01.057
- Investigating the Effect of Microstructure and Surface Functionalization of Mesoporous N-Doped Carbons on V4+/V5+ Kinetics. *ACS Appl. Energy Mater.*, 2020, vol. 3 (12), 11627-11640, https://dx.doi.org/10.1021/acsaem.0c01489